# EUROPEAN PATENT APPLICATION

(11) **EP 4 691 686 A2**
(43) Date of publication of application: **11.02.2026**
(21) Application number: 25173098.2
(22) Date of filing: 29.04.2025
(51) Int. Cl.: B23P 19/00

(54) **FEEDING ARRANGEMENT AND SYSTEM**

(30) Priority: 07.05.2024 SE 2430258
(71) Applicant: Atlas Copco Industrial Technique AB, 105 23 Stockholm (SE)
(72) Inventor: BERGLIND, Tor, 12934 Hägersten (SE)
(74) Representative: Atlas Copco Industrial Technique AB

(57) **Abstract**

The present specification relates to a feeding arrangement for feeding headed parts (P), the feeding arrangement comprising a first receiving track (10a) for receiving (a plurality of) parts, and a feeding device (20) configured to feed single parts from the receiving track (10), wherein the feeding arrangement (1) further comprises a second receiving track (10b), and wherein the feeding device (20) is movably arranged to feed single parts from (any one of) the first and the second receiving track. The present specification also relates to a system comprising a tool for handling the parts (P) and a feeding arrangement (1) according to any of the preceding claims.

## Description

### Technical field

The present invention generally relates to feeding arrangements, more particularly to feeding arrangements for feeding headed parts.

### Background

Power tools for tightening of threaded fasteners are known to be used in various industries. Such power tools may for example be electrically or pneumatically powered. To improve productivity, feeding arrangement for feeding headed parts such as screws to the power tool are known to be used. Such feeding arrangements may for example be arranged to feed the parts individually to the tool.

Further, various types of automatic or semi-automatic screwing applications exist, including applications comprising a robot carrying a tool and a feeding arrangement for feeding and/or orienting the parts or screws prior to being mounted by the robot.

Known feeding arrangements may for example comprise a vibrating matrix plate such that the screws fall into respective openings in the matrix plate to become correctly oriented, a tool and/or a robot may pick up the screws from the matrix plate. Such feeders are however known to be complicated for example since the tool and/or robot has to be provided with information regarding which openings of the matrix plate contain correctly oriented screws.

Other feeding arrangements include rails for feeding the headed parts where the parts may be received and conveyed in the rail in an aligned manner. Similarly to the matrix plate sorter described above, the screws that are not properly received in the rail may be manually removed from the matrix plate or may fall away by gravity. Such arrangements may provide a less complex design, but for applications where the demands on takt time are high the rate of feeding may sometimes be too low.

Hence, there is a need for an improved feeding arrangement that can solve or at least mitigate the above-mentioned problems.

### Summary

Accordingly, it would be desirable to provide a feeding arrangement offering improved productivity. In particular, it would be desirable to provide such a feeding arrangement having a simple and robust design. To better address one or more of these concerns, a feeding arrangement and a system as defined in the independent claims are provided. Preferred embodiments are defined in the dependent claims.

According to a first aspect of the invention, a feeding arrangement for feeding headed parts is provided, the feeding arrangement comprising a first receiving track for receiving (a plurality of) parts, and a feeding device configured to feed single parts from the receiving track, wherein the feeding arrangement further comprises a second receiving track and wherein the feeding device is movably arranged to feed single parts from (any one of) the first and the second receiving track.

According to the first aspect, the feeding arrangement provides an inventive solution to the concerns described above by means of a design comprising a first and a second receiving track from which the feeding device may feed parts.

More particularly, as the feeding device may feed parts from two tracks, the rate of which screws may be supplied to the feeding track may be increased. As more parts can be fed simultaneously, the overall throughput increases and as a result of the enhanced feeding capacity of the feeding arrangement, the overall production productivity may be improved.

The parts may for example be headed parts, i.e. parts comprising a shaft and a head connected to the shaft, such as a screw.

In one embodiment, the feeding device comprises a feeding space, or seat for receiving parts from at least one of the first and the second track. In some embodiments, the feeding device comprises a first feeding space, or seat for receiving parts from the first receiving track and a second feeding space, or seat for receiving parts from the second receiving track.

According to one embodiment, the feeding arrangement is configured to move the feeding device between a first input feeding position for feeding parts from the first receiving track and an output feeding position and between a second input feeding position for feeding parts from the second receiving track and the output feeding position. Hereby, screws maybe conveniently fed to the feeding position from any one of the first and second receiving track. The first feeding position may be a position where the feeding device may receive a part from the first receiving track, the second feeding position may be a position where the feeding device may receive a part from the second receiving track and an output position may be any position where the feeding device may feed the parts further, i.e. forward the parts. In some embodiments, the feeding arrangement may comprise a single feeding device.

According to one embodiment, the feeding arrangement is configured to rotate the feeding device between the first input feeding position and the output feeding position and between the second input feeding position and the output feeding position. Other embodiments may include a feeding device configured to translate between input positions.

According to one embodiment, the feeding arrangement is configured to rotate the feeding device back and forth between the first input feeding position and the second input feeding position. In some embodiments, the feeding device is configured to rotate the feeding device back and forth between the output feeding position and the first input feeding position and the second input feeding position respectively. This could also involve alternating between the first and second input feeding position. The movement may in some embodiments also be described as movement back and forth between the first input feeding position and the second input feeding position, passing and/or making a halt at the output position (to feed the parts forward).

According to one embodiment, the feeding device comprises a rotatable circular plate, wherein a first feeding space for receiving parts from the first track and a second feeding space for receiving parts from the second track are formed in the plate. The first and/or second feeding space may for example be a recess formed in the plate. According to one embodiment, the first feeding space is aligned with the first feeding track in the first feeding position and the second feeding space is aligned with the second feeding track in the second feeding position.

According to one embodiment, the first and second feeding spaces are arranged at an outer circumference of the plate, such that the first feeding position and/or the second feeding position coincides with the output feeding position. In other words, the first and second feeding spaces may be arranged at an outer circumference of the plate, such that the first feeding space aligns with the first rail when the second feeding space aligns with a position where the feeding device may feed the parts further, and vice versa. Hereby, as the plate is rotated back and forth between the first and second feeding position, the feeding spaces never have to pass the tracks when not stopping to pick up a screw. I.e., the first feeding space need not to pass the second track and vice versa, thus avoiding jamming of parts and the like and ensuring a smooth and efficient operation. Further, it follows that in such an embodiment, the first feeding position as well as the second feeding position coincides with the output position, and thus as the plate halts it may simultaneously receive a screw from a receiving track at one receiving space and feed a screw (previously received at the other track) further along at the other receiving space.

In some embodiments, the feeding arrangement comprises no more or less than two tracks and no more or less than two feeding spaces. Hereby, a design where the feeding spaces never have to pass the receiving tracks and thus providing the advantages described above may be advantageously achieved.

According to one embodiment, the first and second feeding spaces are arranged at an outer circumference C of the plate, such that an angular distance between the first and second feeding spaces is ≠ 180°. According to one embodiment, the first and second feeding spaces are arranged at an outer circumference of the plate, and wherein an angular distance between the first and second feeding space is equal to 180° ± α, α being half the angular center to center distance between the first and second track.

According to one embodiment, the first and second tracks extend in parallel to one another. According to one embodiment, each one of the first and second tracks comprises a respective end portion each having a curvature matching that of the circular plate, such that they together form a shape adapted to at least partly accommodate the circular plate. The curvature may for example correspond to that of the circular plate, i.e. together forming/having a combined curvature congruent to a portion of the circumference of the circular plate. Hereby, a smooth transition of parts is facilitated.

According to one embodiment, the feeding arrangement further comprises a motor for rotating the feeding device. The motor may for example be an air motor or a stepper motor. The feeding arrangement may further comprise a control device for controlling the operation of such a motor.

The feeding device may for example be configured to feed single parts at a specific speed or the like. The feeding device may further be configured to feed single parts from the first and the second receiving track to the downstream track in a predetermined manner/order or in a random manner/order.

In some embodiments, parts may be received and conveyed in the first and second receiving track in an aligned manner. Parts that are not properly received in the rail may be manually removed or may fall away by gravity. According to one embodiment, each one of the first and/or the second receiving tracks comprises a receiving profile allowing parts to be conveyed while having a single orientation, such as a single orientation only. The single orientation may be a head-up orientation. The first and second receiving track may further be arranged inclined relative to a horizontal direction.

According to one embodiment, the feeding arrangement further comprises an input section allowing parts to be accommodated in a plurality of different orientations, for supplying parts to the receiving tracks. In some embodiments, the input section may be an input track having an input profile allowing parts to be conveyed in a plurality of different orientations. In some embodiments, the input section is an input tray allowing parts to be stored in a plurality of different orientations. A diverting section may be arranged between the input section and the first and second receiving track, such a diverting section may be arranged to divert parts conveyed from the input section having an orientation not fitting the receiving track profile.

According to one embodiment, the feeding arrangement further comprises a downstream track and wherein the feeding device is configured to feed single parts from the receiving tracks to the downstream track. The feeding arrangement may in other embodiments be configured to feed single parts from the receiving tracks to a power tool.

The feeding arrangement may further be composed as a single unit.

According to a second aspect of the invention, a system comprising a power tool for handling the parts and a feeding arrangement according to any of the embodiments described in the foregoing is provided. The power tool may for example be an electric, hydraulic or pneumatic power tool. Alternatively, or in addition, the tool may be a tightening tool, e.g. for tightening a nut on a threaded member. The feeding arrangement may be positioned immediately adjacent to the tool. The system may further comprise a robot.

According to a third aspect, there is provided a kit of parts comprising the feeding arrangement according to the first aspect or the system according to the second aspect, and a plurality of headed parts, such as screws.

Objectives, advantages and features conceivable within the scope of the second and third aspects of the invention are readily understood by the foregoing discussion referring to the first and second aspect of the invention.

Further objectives of, features of and advantages of the present invention will also become apparent when studying the following detailed disclosure, the drawings and the appended claims. Those skilled in the art realize that different features of the present invention can be combined to create embodiments other than those described in the following.

### Brief description of the drawing

The invention will be described in the following illustrative and non-limiting detailed description of exemplary embodiments, with reference to the appended drawing, on which
Figure 1 is a perspective view of an exemplary feeding arrangement according to one embodiment.
Figure 2 is a top view of an exemplary feeding arrangement according to one embodiment.

All figures are schematic, not necessarily to scale and generally only show parts which are necessary in order to elucidate the invention, wherein other parts may be omitted or merely suggested.

### Detailed description

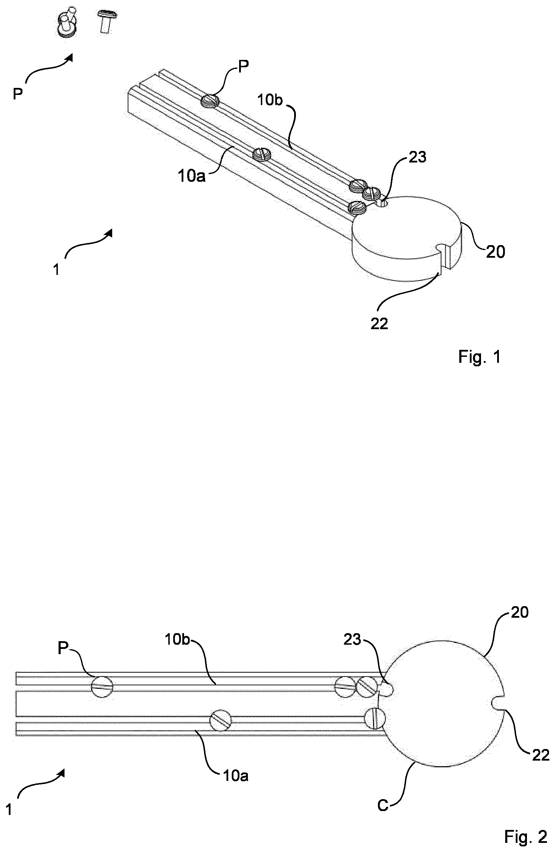

In fig. 1 a feeding arrangement 1 for feeding headed parts P, such as for example screws P, is shown in a perspective view.

The feeding arrangement 1 comprises a first receiving track 10a and a second receiving track 10b, for receiving a plurality of parts P, for example in an aligned manner. The parts P may be provided to the tracks 10a, 10b from an input section (not shown) such as a storage bin or an input track or similar.

The feeding arrangement further comprises a feeding device 20 configured to feed single parts P from any one of the receiving tracks 10a, 10b. The feeding device 20 is movably arranged to feed the single parts P from the first and/or the second receiving track 10a, 10b.

The feeding device 20 may comprise one or more feeding spaces or seats 22, 23 for receiving parts P from the first and second track 10a, 10b. The feeding arrangement 1 may be configured to move the feeding device 20 between a first input feeding position for feeding parts from the first receiving track 10a and an output feeding position and between a second input feeding position for feeding parts from the second receiving track 10b and the output feeding position. The first feeding position being a position where the feeding spaces or seat(s) 22, 23 may receive a part P from the first receiving track 10a, the second feeding position being a position where the feeding spaces or seat(s) 22, 23 may receive a part P from the second receiving track 10b and an output position being any position where the feeding device 20 may feed the parts P further along from any one of the feeding spaces or seats 22, 23.

At the output position, parts may be conveyed further. For example, parts may be picked up by a power tool (not shown), or alternatively fed to a downstream track (not shown) arranged to convey parts further.

The feeding device 20 may for example be configured to rotate between the first input feeding position and the second input feeding position. The feeding device 20 may for example comprise a rotatable circular plate 20, wherein a first feeding space 22 for receiving parts from the first track 10a and a second feeding space 23 for receiving parts from the second track 10b are formed in the plate 20.

The spaces 22, 23 may for example be recesses formed, or arranged, at an outer circumference C of the plate 20. The spaces 22, 23 may further be arranged such that the first feeding space 22 is aligned with the first feeding track in the first feeding position and the second feeding space 23 is aligned with the second feeding track in the second feeding position. This could be achieved by rotating the plate 20. The output position may in such an embodiment be a position where one of the first and the second feeding spaces 22, 23 is located at a position where the part P may be fed further along and/or picked up by a tool.

Fig. 2 shows the arrangement of the spaces 22, 23 of an exemplary embodiment in detail. More particularly, it may be seen that the spaces 22, 23 are arranged at the outer circumference C of the plate 20, such that an angular distance between the first and second feeding spaces is ≠ 180°. The angular distance is further chosen such that the first feeding space 22 aligns with the first rail 10a when the second feeding space 23 aligns with a position where the part P may be fed further along and/or picked up by a tool and vice versa. In fig. 2, the plate 20 is hence illustrated in the second feeding position (the second feeding space 23 is aligned with the second track 10b), which for the illustrated embodiment coincides with an output position where the first receiving space 22 is located at a position where a part could be fed further along and/or picked up by a tool (not illustrated).

The feeding device 20 may further be configured to rotate the feeding plate 20 back and forth between the first input feeding position and the second input feeding position. I.e., the feeding plate 20 may alternate between the feeding positions and thus alternate between feeding from the first and the second track 10a, 10b. For example, with reference to the embodiment shown in fig. 2, starting from the illustrated situation when the second receiving space 23 is positioned at the opening or end of the second track 10b (i.e. second feeding position), the plate 20 turns clockwise until the second space 23 reaches the output feeding position whereby the first feeding space 22 simultaneously reaches the first track 10a (i.e. first feeding position), followed by a counterclockwise rotation until the first feeding space 22 reaches a position where the screw could be fed further along (coinciding with the second feeding position). Hereby, it is ensured that the first feeding space 22 need not to pass the second feeding track 10b and vice versa, thus avoiding jamming of parts and the like ensuring a smooth and efficient operation. To this end, the feeding arrangement may comprise a motor, such as an air motor or an electrical stepper motor, for rotating the plate and optionally a control unit for controlling the motor to achieve the rotational movement described above.

The receiving tracks may further have a receiving profile allowing parts P to be conveyed while having a single orientation only, such as for example a head up-direction of the headed parts P.

The first and the second receiving tracks 10a, 10b may for example be arranged to extend in parallel to one another. Each of the tracks 10a, 10b may further comprise a respective end portion 100a, 100b having a curvature matching that of the circular plate 20. As may be seen for example from fig. 2, these end portions 100a, 100b may then together form a shape adapted to accommodate the circular plate 20 at least partly, in the illustrated case the combined shape of the end portions is that of a circular arc having a matching radius to that of the plate 20. Such a design may also contribute to efficient operation by avoiding jamming of parts and the like.

While the invention has been illustrated and described in detail in the drawings and foregoing description, such illustration and description are to be considered illustrative or exemplary and not restrictive; the invention is not limited to the disclosed embodiment. The skilled person understands that many modifications, variations and alterations are conceivable within the scope as defined in the appended claims. Additionally, variations to the disclosed embodiments can be understood and effected by those skilled in the art in practicing the claimed invention, from a study of the drawings, the disclosure and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A feeding arrangement (1) for feeding headed parts (P), the feeding arrangement comprising:
a first receiving track (10a) for receiving (a plurality of) parts, and
a feeding device (20) configured to feed single parts from the receiving track (10),
wherein the feeding arrangement (1) further comprises a second receiving track (10b), and wherein the feeding device (20) is movably arranged to feed single parts from the first and the second receiving track.

2. Feeding arrangement according to claim 1, wherein the feeding arrangement is configured to move the feeding device (20) between a first input feeding position for feeding parts from the first receiving track (10a) and an output feeding position and between a second input feeding position for feeding parts from the second receiving track (10b) and an output feeding position.

3. Feeding arrangement according to claim 2, wherein the feeding arrangement is configured to rotate the feeding device (20) between the first input feeding position and the output feeding position and between the second input feeding position and the output feeding position.

4. Feeding arrangement according to claim 3, wherein the feeding arrangement is configured to rotate the feeding device (20) back and forth between the first input feeding position and the second input feeding position.

5. Feeding arrangement according to claim 3 or 4, wherein the feeding device comprises a rotatable circular plate (20), wherein a first feeding space (22) for receiving parts from the first track (10a) and a second feeding space (23) for receiving parts from the second track (10b) are formed in the plate.

6. Feeding arrangement according to claim 5, wherein the first feeding space (22) is aligned with the first feeding track in the first feeding position and wherein the second feeding space (23) is aligned with the second feeding track in the second feeding position.

7. Feeding arrangement according to claim 5 or 6, wherein the first and second feeding spaces are arranged at an outer circumference C of the plate (20), such that an angular distance between the first and second feeding spaces is ≠ 180°.

8. Feeding arrangement according to any one of claim 5-7, wherein the first and second feeding spaces are arranged at an outer circumference of the plate (20), such that the first feeding position and/or the second feeding position coincides with the output feeding position.

9. Feeding arrangement according to any one of claims 5-8, wherein the first and second feeding spaces are arranged at an outer circumference of the plate (20), and wherein an angular distance between the first and second feeding space is equal to 180° ± α, α being half the angular center to center distance between the first and second track.

10. Feeding arrangement according to any one of the preceding claims, wherein the first and second tracks (10a,10b) extend in parallel to one another.

11. Feeding arrangement according to claim 10, wherein each one of the first and second tracks (10a,10b) comprises a respective end portion (100a,100b) having a curvature matches that of the circular plate (20), such that they together form a shape adapted to at least partly accommodate the circular plate.

12. Feeding arrangement according to any of the preceding claims, further comprising a motor for rotating the feeding device.

13. Feeding arrangement according to any one of the preceding claims, wherein each one of the first and/or the second receiving tracks comprises a receiving profile allowing parts to be conveyed while having a single orientation.

14. Feeding arrangement according to any one of the preceding claims, further comprising an input section allowing parts (P) to be accommodated in a plurality of different orientations, for supplying parts to the receiving tracks (10a,10b).

15. Feeding arrangement according to any of the preceding claims, wherein the feeding arrangement further comprises a downstream track and wherein the feeding device (20) is configured to feed single parts (P) from the receiving tracks (10a,10b) to the downstream track.

16. A system comprising a tool for handling the parts (P) and a feeding arrangement (1) according to any of the preceding claims.
